# EUROPEAN PATENT SPECIFICATION

(11) **EP 1 382 280 B1**
(45) Date of publication and mention of the grant of the patent: **22.06.2005**
(21) Application number: 02258151.6
(22) Date of filing: 27.11.2002
(51) Int. Cl.: A47J 27/16, F24C 15/00

(54) **Bread maker**
Brotbackgerät
Appareil de cuisson de pain

(30) Priority: 19.07.2002 KR 2002042585
(43) Date of publication of application: 21.01.2004
(73) Proprietor: SAMSUNG ELECTRONICS CO., LTD., Suwon-City, Kyungki-do (KR)
(72) Inventor: Sung, Han-jun, Jugong Apt., No.909-202, Suwon City, Kyungki-do (KR); Park, Jae-ryong, Jugong Apt., No. 401-1603, Suwon City, Kyungki-do (KR)
(74) Representative: Brandon, Paul Laurence

(56) References cited:
- US-A- 5 532 456
- US-A- 6 029 563

## Description

The present invention relates to bread makers and methods of use of the same. More particularly, though not exclusively, the present invention relates to bread makers with a steam generating structure to provide a moisture environment inside the bread maker.

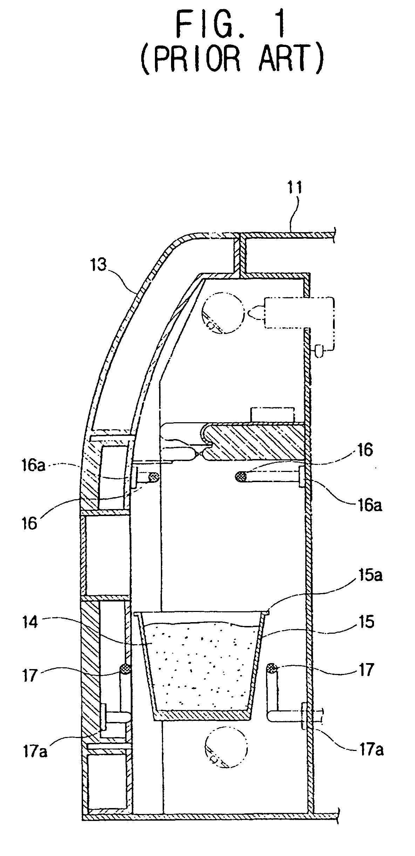

Figure 1 is a side sectional view partially illustrating a conventional bread maker. As shown therein, a bread maker generally comprises a casing 11 forming an outer enclosure, a door 13 rotatably connected to the casing 11 to open and close an entrance in the casing 11, and a baking tray 15 inside the casing 11 in which dough 14 for bread is contained.

On the lower inside walls of the casing 11 facing opposite walls of the baking tray 15 are lower brackets 17a. Lower heaters 17 are connected to the lower brackets 17a to bake a lateral part of the dough 14 contained in the baking tray 15. On the upper inside walls of the casing 11 facing an opening 15a of the baking tray 15 are upper brackets 16a. Upper heaters 16 are connected to the upper brackets 16a to bake an upper part of the dough 14 contained in the baking tray 15.

However, in the conventional bread maker, a problem occurs in that moisture inside the dough 14 is excessively vaporized through the surface thereof while the dough 14 is baking, so that the bread is likely to have a hard or cracked crust. Hence, the crust of the bread is not satisfactorily baked because the surface of the dough 14 has low moisture while being baked, and it is difficult to keep the moisture in the bread.

In an attempt to address the above problem, there has been proposed a bread maker with a steam generator in a casing in U.S. Patent No. US-A-4,803,086. However, in this bread maker, there are additionally needed a heater for generating steam, a pipe, a valve, and a water reservoir for dispensing water to the steam generator, resulting in the structure of the bread maker being complicated.

It is an aim of preferred embodiments of the present invention to provide a bread maker which has a simple steam generating structure, and is capable of tastily baking bread by controlling moisture environment thereinside.

Additional advantages of preferred embodiments of the invention are set forth in part in the description that follows, and, in part, will be obvious from the description, or may be learned by practice of the invention.

US 6 029 563 discloses a cooking machine operable in either a bread maker mode or a steamer mode. The bread maker is according to the pre-characterising portion of Claim 1.

According to an aspect of the present invention, there is provided a bread maker having a casing forming an outer enclosure, and a baking tray inside the casing to contain bread dough, including an upper heater inside the casing; a lower heater inside the casing; and a water reservoir which can be filled with water inside the casing adjacent to the lower heater, to generate steam while being heated by the lower heater characterised in that the upper heater is facing an opening in the top of the baking tray to heat the baking tray, the lower heater is facing a lateral part of the baking tray to heat the baking tray and the bread maker is configured to generate steam during a bread making process.

Suitably, a distance from a bottom of the bread maker to a top of the water reservoir is substantially equal to or higher than a distance from the bottom of the bread maker to the top of the baking tray to readily supply steam to the bread dough.

Suitably, the water reservoir is detachably installed to the inside of the casing.

Suitably, the water reservoir has at least one hooking flange at a side thereof, and the casing has at least one hooking flange holder to which the hooking flange of the water reservoir is attached.

Suitably, the water reservoir has a plurality of projections under the hooking flanges, which protrude from the side of the water reservoir substantially the same distance as the hooking flanges, to prevent the water reservoir from tipping when the hooking flanges are hooked onto the hooking flange holder.

Suitably, the casing has a projection under the hooking flange holder, which protrudes from the side of the water reservoir substantially the same distance as the hooking flange.

Suitably, the bread maker further includes an auxiliary heater inside the casing to heat a lateral part of the water reservoir and adjust an amount of the steam generated from the water reservoir.

Suitably, the bread maker further includes a heat-insulated bracket connected to an outside wall of the casing adjacent to the auxiliary heater, and used for heat insulation.

Further features of the present invention are set out in the attached appended claims.

These together with other aspects and advantages which will be subsequently apparent, reside in the details of construction and operation as more fully hereinafter described and claimed, reference being had to the accompanying drawings forming a part thereof, wherein like numerals refer to like parts throughout.

The present invention will become apparent and more readily appreciated from the following description of embodiments thereof, by way of example only, taken in conjunction with the accompany drawings, of which:
Figure 1 is a side sectional view partially illustrating a conventional bread maker;
Figure 2 is a side sectional view partially illustrating a bread maker according to a first embodiment of the present invention;
Figure 3 is a front view of a water reservoir mounted on the bread maker of Figure 1;
Figure 4 is a rear perspective view of the water reservoir shown in Figure 3;
Figure 5 is a perspective view of the bread maker according to the first embodiment of the present invention; and
Figure 6 is a side sectional view partially illustrating a bread maker according to a second embodiment of the present invention.

Hereinafter, embodiments of the present invention will be described in detail with reference to the attached drawings, wherein the like reference numerals refer to the like elements throughout. The present invention may, however, be embodied in many different forms and should not be construed as being limited to the embodiments set forth herein; rather, these embodiments are provided so that the present disclosure will be thorough and complete, and will fully convey the concept of the invention to those skilled in the art.

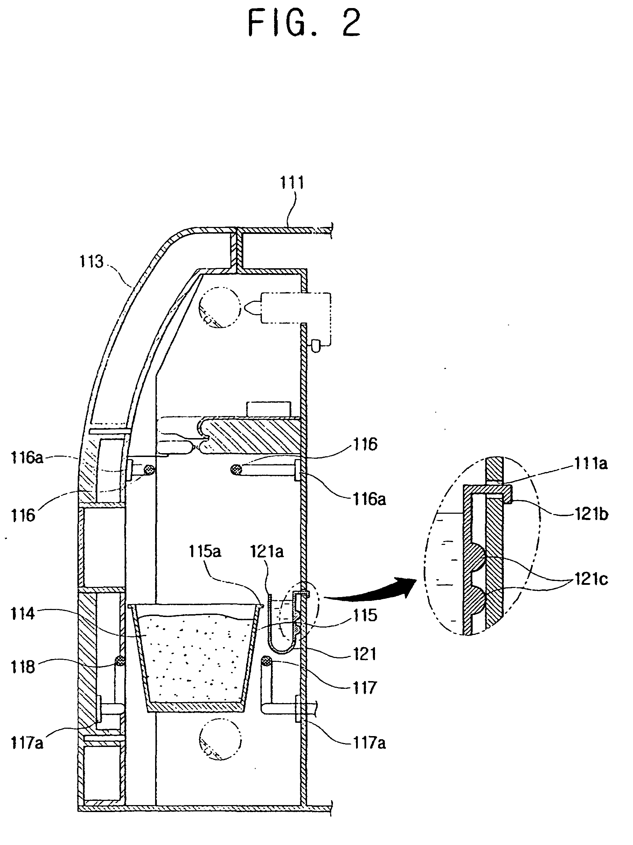

Figure 2 is a side sectional view partially illustrating a bread maker according to a first embodiment of the present invention. As shown therein, a bread maker according to the first embodiment of the present embodiment includes a casing 111 forming an outer enclosure, a door 113 rotatably attached to the casing 111 to open and close an entrance in the casing 111, and a baking tray 115 inside the casing 111 in which dough 114 for bread is contained.

On the lower inside walls of the casing 111 facing opposite walls of the baking tray 115 are lower brackets 117a. Lower heaters 117 and 118 are connected to the lower brackets 117a for baking a lateral part of the dough 114 contained in the baking tray 115. On the upper inside walls of the casing 111 facing an opening 115a in the top of the baking tray 115 are upper brackets 116a. Upper heaters 116 are connected to the upper brackets 116a for baking an upper part of the dough 114 contained in the baking tray 115.

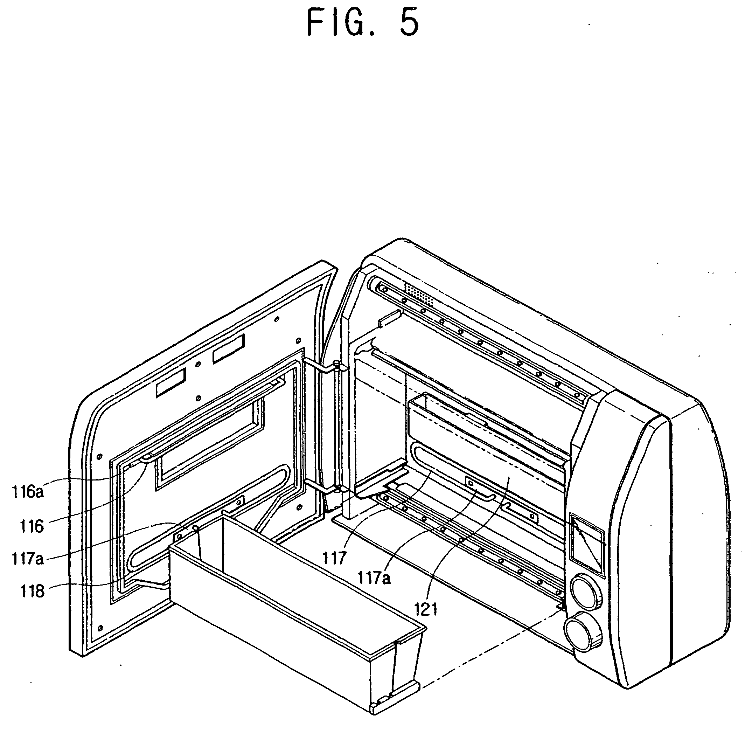

As shown in Figures 2 and 5, a water reservoir 121 is located above the lower heater 117 to increase heating efficiency for the water reservoir 121. To further increase heating efficiency, the water reservoir 121 is made of a metal having a high thermal conductivity. Thus, when the water reservoir 121 is heated by the lower heater 117, the water in the water reservoir 121 evaporates, supplementing the surface of the dough 114 contained in the baking tray 115 with vaporized water from the water reservoir 121 while the dough 114 is baking.

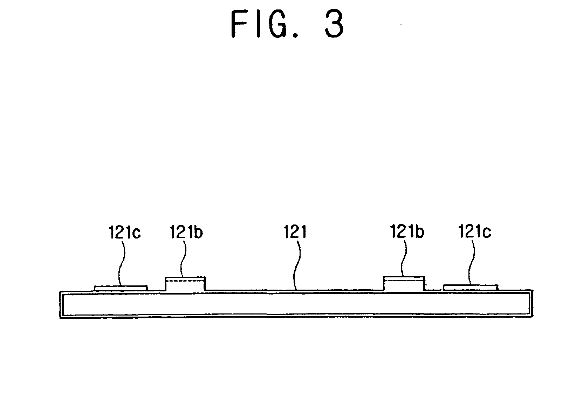

Referring to Figures 2 through 4, to one side of an opening 121a in the top of the water reservoir 121 are a plurality of hooking flanges 121b, and in an inside wall of the casing 111 adjacent to the water reservoir 121 is a hooking flange holder 111a to which the hooking flanges 121b are hooked and supported. With this, the water reservoir 121 is detachably installed to the inside wall of the casing 111. In the present embodiment, the water reservoir 121 has the hooking flange 121b, and the casing 111 has the hooking flange holder 111a. However, in another embodiment, the casing 111 may have the hooking flange, and the water reservoir 121 may have the hooking flange holder. Further, the casing 111 may have a supporting holder (not shown) to support a lower part of the water reservoir 121.

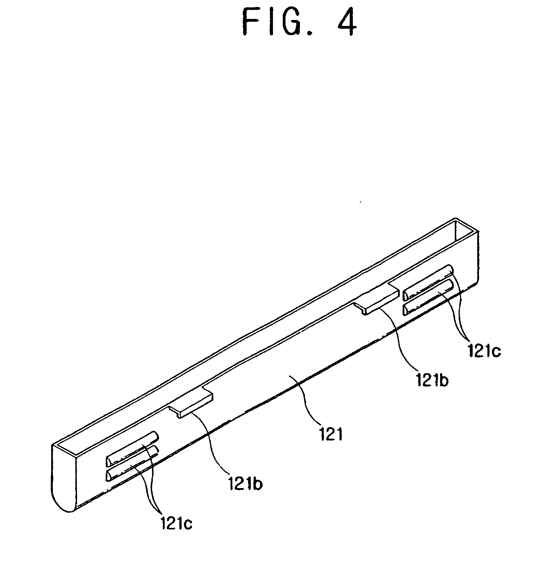

Referring to Figures 2 and 4, the water reservoir 121 has projections 121c under the hooking flanges 121b, which are employed for preventing the water reservoir 121 from being tipped when the hooking flanges 121b are hooked onto the hooking flange holder 111a. The projections 121c protrude substantially the same distance as the hooking flanges 121b. In the present embodiment, the projections 121c are provided in the water reservoir 121. However, in another embodiment, the projections may be provided in the casing 111.

As shown in Figure 2, the distance from the bottom of the bread maker to the opening 121a of the water reservoir 121 is approximately equal to or slightly higher than the distance to the opening 115a of the baking tray 115. Hence, the steam generated from the water reservoir 121 can be easily supplied to the surface of the dough 114 while the dough 114 is baked.

In the present embodiment, the water reservoir 121 is, as shown in Figure 2, provided inside the casing 111 distant from the door 113. However, the water reservoir 121 may be provided inside the casing 111 adjacent to the door 113.

In the bread maker according to the first embodiment of the present invention, the lower heater 117 heats both the baking tray 115 and the water reservoir 121.

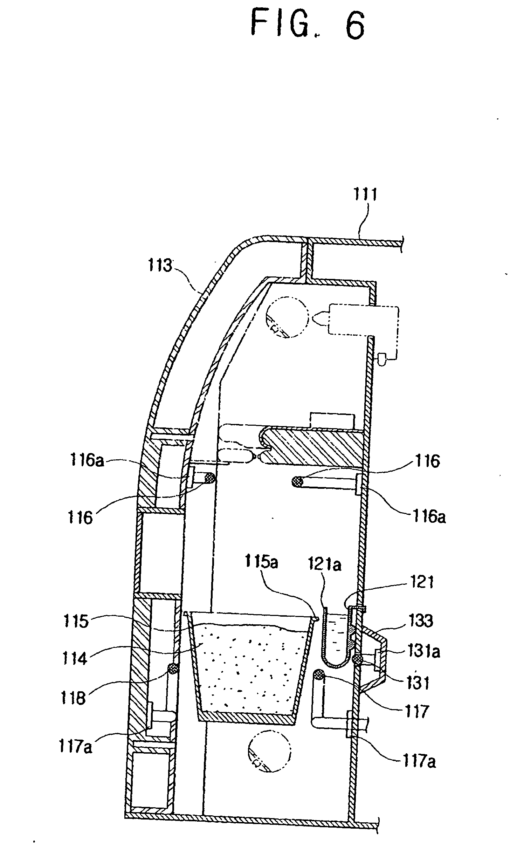

Figure 6 is a side sectional view partially illustrating a bread maker according to a second embodiment of the present invention. As shown therein, compared to the first embodiment, the bread maker according to the second embodiment includes an auxiliary heater 131 adjacent to the lateral part of the water reservoir 121.

The auxiliary heater 131 is employed for adjusting the amount of the steam generated from the water reservoir 121. That is, when the steam is insufficiently generated from the water reservoir 121, the auxiliary heater 131 heats the water reservoir 121, thereby increasing the amount of the steam. The auxiliary heater 131 is controlled independently of the upper and lower heaters 116, 117, and 118 and a hygrometer (not shown) is provided for controlling the auxiliary heater 131.

The auxiliary heater 131 passes through the casing 111 and is surrounded with a heat-insulated bracket 133 provided in the outside wall of the casing 111. The heat-insulated bracket 133 has a supporting bracket 131a supporting the auxiliary heater 131, and is used for heat insulation. Further, the casing 111 is formed with a hole through which the auxiliary heater 131 is passed and arranged near the water reservoir 121.

In the bread maker according the second embodiment, the lower heater 117 heats both the baking tray 115 and the water reservoir 121, and the auxiliary heater 131 controls the amount of the steam when the steam is insufficiently generated from the water reservoir 121.

As described above, preferred embodiments of the present invention provide a bread maker in which the moisture environment inside is controlled by a simple steam generating structure, so that bread is satisfactorily baked.

Although a few embodiments of the present invention have been shown and described, it will be appreciated by those skilled in the art that changes may be made in these embodiments without departing from the principles and spirit of the invention, the scope of which is defined in the appended claims and their equivalents.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A bread maker having a casing (111) forming an outer enclosure, and a baking tray (115) inside the casing (111) to contain bread dough (114), comprising:
an upper heater (116) inside the casing (111);
a lower heater (117, 118) inside the casing (111); and
a water reservoir (121) which can be filled with water inside the casing (111) adjacent to the lower heater (117, 118), to generate steam while being heated by the lower heater (117, 118) **characterised in that** the upper heater is facing an opening in the top of the baking tray (115) to heat the baking tray (115), the lower heater is facing a lateral part of the baking tray (115) to heat the baking tray (115) and the bread maker is configured to generate steam during a bread making process.

2. The bread maker according to claim 1, wherein a distance from a bottom of the bread maker to a top of the water reservoir (121) is substantially equal to or greater than a distance from the bottom of the bread maker to the top of the baking tray (115) to readily supply steam to the bread dough (114).

3. The bread maker according to claim 1 or claim 2, wherein the water reservoir (121) is detachably installed to the inside of the casing (111).

4. The bread maker according to claim 3, wherein the water reservoir (121) has at least one hooking flange (121b) at a side thereof, and the casing (111) has at least one hooking flange holder (111a) to which the hooking flange (121b) of the water reservoir (121) is attached.

5. The bread maker according to claim 4, wherein the water reservoir (121) has a plurality of projections (121c) under the hooking flanges (121b), which protrude from the side of the water reservoir (121) substantially the same distance as the hooking flanges (121b), to prevent the water reservoir (121) from tipping when the hooking flanges (121b) are hooked onto the hooking flange holder (111a).

6. The bread maker according to claim 4, wherein the casing (111) has a projection under the hooking flange holder (111a), which protrudes from the side of the water reservoir (121) substantially the same distance as the hooking flange (121b).

7. The bread maker according to any preceding claim, further comprising an auxiliary heater (131) inside the casing (111) to heat a lateral part of the water reservoir (121) and adjust an amount of the steam generated from the water reservoir (121).

8. The bread maker according to claim 7, further comprising a heat-insulated bracket (133) connected to an outside wall of the casing (111) adjacent to the auxiliary heater (131), and used for heat insulation.

9. The bread maker according to any preceding claim, wherein the water reservoir is made of a metal having a high thermal conductivity.

10. The bread maker according to claim 4, wherein the hooking flanges (121b) are attached to the casing (111) and the hooking flange holders (111a) are attached to the water reservoir (121).

11. The bread maker according to any preceding claim, further comprising a supporting holder inside the casing (111) to support a lower part of the water reservoir (121).

12. The bread maker according to any preceding claim, wherein the water reservoir is located adjacent to a door attached to the casing.

13. The bread maker according to claim 8, wherein the auxiliary heater (131) is passed through an opening in the casing (111) and placed near the water reservoir (121), and the heat-insulated bracket (133) surrounds the portion of the auxiliary heater (131) extending outside the casing (111).

14. The bread maker according to claim 8 or claim 13, wherein the heat-insulated bracket (133) includes a supporting bracket (131a) to support the auxiliary heater (131).

15. A method of use of a bread maker **characterised in that** the bread maker is according to any preceding claim, the method comprising the steps of:
at least partly filling the water reservoir (121) with water; and
heating the baking tray (115) and the water reservoir (121).

## Patentansprüche

1. Brotbackmaschine mit einem Gehäuse (111), welches eine äußere Umhüllung bildet, und mit einem Backtrog (115) innerhalb des Gehäuses (111) zum Aufnehmen von Brotteig (114), mit
einer oberen Helzeinrichtung (116) innerhalb des Gehäuses (111);
einer unteren Helzeinrichtung (117, 118) innerhalb des Gehäuses (111); und einem Wasserspeicher (121), welcher mit Wasser innerhalb des Gehäuses (111) benachbart zu der unteren Helzeinrichtung (117, 118) gefüllt werden kann, um Dampf zu erzeugen, während er durch die untere Helzeinrichtung (117, 118) erhitzt wird,
**dadurch gekennzeichnet,**
**dass** die obere Helzeinrichtung einer Öffnung in der Oberseite des Backtrogs (115) gegenüber liegt, um den Backtrog (115) zu erhitzen,
**dass** die untere Helzeinrichtung einem seitlichen Teil des Backtrogs (115) gegenüber liegt, um den Backtrog (115) zu erhitzen und
**dass** die Brotbackmaschine so aufgebaut ist, dass sie Dampf während eines Brotherstellungsvorganges erzeugt.

2. Brolbackmaschine nach Anspruch 1,
in welcher ein Abstand von einem Boden der Brotbackmaschine zu einer Oberseite des Wasserspeichers (121) im Wesentlichen gleich oder größer als ein Abstand von dem Boden der Brotbackmaschine zu der Oberseite des Backtrogs (115) ist, um unmittelbar Dampf dem Brotteig (114) zuzuführen.

3. Brotbackmaschine nach Anspruch 1 oder 2,
in welcher der Wasserspeicher (121) abnehmbar auf der innenseite des Gehäuses (111) angebracht ist.

4. Brotbackmaschine nach Anspruch 3,
in welcher der Wasserspeicher (121) wenigstens einen Einhakeflansch (121b) an einer seiner Seiten aufweist, und in welcher das Gehäuse (111) wenigstens einen Einhakeflanschhalter (111a) besitzt, an welchem der Einhakeflansch (121b) des Wasserspeichers (121) angebracht ist.

5. Brotbackmaschine nach Anspruch 4,
in welcher der Wasserspeicher (121) mehrere Vorsprünge (121c) unter den Einhakeflanschen (121b) besitzt, welche von der Seite des Wasserspeichers (121) um im Wesentlichen den gleichen Abstand, wie die Einhakeflansche (121b) vorstehen, um den Wasserspeicher (121) deren zu hindern, zu kippen, wenn die Einhakeflansche (121b) auf die Einhakeflanschhalter (111a) eingehängt werden.

6. Brotbackmaschine nach Anspruch 4,
in welcher das Gehäuse (111) einen Vorsprung unter dem Einhakeflanschhalter (111a) besitzt, welcher von der Seite des Wasserspeichers (121) um im Wesentlichen den gleichen Abstand wie der Einhakeflansch (121b) vorspringt.

7. Brotbackmaschine nach einem der vorstehenden Ansprüche,
außerdem aufweisend eine Hilfshelzeinrichtung (131) innerhalb des Gehäuses (111), um einen seitlichen Teil des Wasserspeichers (121) zu erhitzen und eine Menge von in dem Wasserspeicher (121) erzeugtem Dampf einzuregeln.

8. Brotbackmaschine nach Anspruch 7,
außerdem aufweisend eine wärmeisolierte, mit einer Außenwand des Gehäuses (111) benachbart zu der Hilfsheizeinrichtung (131) verbundene und für eine Wärmeisolierung verwendete Klammer (133).

9. Brotbackmaschine nach einem der vorstehenden Ansprüche,
in welcher der Wasserspeicher aus einem Metall mit einer hohen thermische Leitfähigkeit besteht.

10. Brotbackmaschine nach Anspruch 4,
in welcher die Einhakeflansche (121b) an dem Gehäuse (111) angebracht sind und die Einhakeflanschhalter (111a) an dem Wasserspeicher (121) angebracht sind.

11. Brotbackmaschine nach einem der vorstehenden Ansprüche,
außerdem aufweisend einen Unterstützungshalter innerhalb des Gehäuses (111) zum Stützen eines unteren Teils des Wasserspeichers (121).

12. Brotbackmaschine nach einem der vorstehenden Ansprüche,
in welcher der Wasserspeicher benachbart zu einer an dem Gehäuse angebrachten Tür angeordnet ist.

13. Brotbackmaschine nach Anspruch 8,
in welcher die Hilfsheizeinrichtung (131) durch eine Öffnung in dem Gehäuse (111) hindurchgeführt ist und benachbart zum Wasserspeicher (121) platziert ist und die wärmeisolierte Klammer (133) den Abschnitt der Hilfsheizeinrichtung (131) umgibt, der sich außerhalb des Gehäuses (111) erstreckt.

14. Brotbackmaschine nach Anspruch 8 oder 13,
in welcher die wärmeisolierte Klammer (133) eine Unterstützungsklammer (131a) einschließt, um die Hilfsheizeinrichtung (131) zu stützen.

15. Verfahren zur Verwendung einer Brotbackmaschine,
**dadurch gekennzeichnet,**
**dass** die Brotbackmaschine nach einem der vorstehenden Ansprüche ist, wobei das Verfahren folgende Schritte aufweist:
- wenigstens teilweises Füllen des Wasserspeichers (121) mit Wasser; und
- Erhitzen des Backtrogs (115) und des Wasserspeichers (121).

## Revendications

1. Machine à pain comportant une gaine (111) formant une enceinte extérieure, et un bac de cuisson (115) à l'intérieur de la gaine (111) pour contenir la pâte à pain (114), comprenant :
un dispositif de chauffage supérieur (116) à l'intérieur de la gaine (111) ;
un dispositif de chauffage inférieur (117, 118) à l'intérieur de la gaine (111) ; et
un réservoir d'eau (121) pouvant être rempli d'eau à l'intérieur de la gaine (111), adjacent au dispositif de chauffage inférieur (117, 118), pour générer de la vapeur pendant qu'il est chauffé par le dispositif de chauffage inférieur (117, 118), **caractérisé en ce que** le dispositif de chauffage supérieur fait face à une ouverture dans le haut du bac de cuisson (115) pour chauffer le bac de cuisson (115), le dispositif de chauffage inférieur fait face à une partie latérale du bac de cuisson (115) pour chauffer le bac de cuisson (115) et la machine à pain est configurée pour générer de la vapeur pendant un processus de fabrication de pain.

2. Machine à pain selon la revendication 1, dans laquelle une distance entre un fond de la machine à pain et un sommet du réservoir d'eau (121) est sensiblement égale ou supérieure à une distance entre le fond de la machine à pain et le sommet du bac de cuisson (115) pour fournir facilement de la vapeur à la pâte à pain (114).

3. Machine à pain selon la revendication 1 ou 2, dans laquelle le réservoir d'eau (121) est installé de manière amovible à l'intérieur de la gaine (111).

4. Machine à pain selon la revendication 3, dans laquelle le réservoir d'eau (121) comporte au moins une bride d'accrochage (121b) au niveau d'un côté de celui-ci, et la gaine (111) comporte au moins un support de bride d'accrochage (111a) auquel la bride d'accrochage (121b) du réservoir d'eau (121) est fixée.

5. Machine à pain selon la revendication 4, dans laquelle le réservoir d'eau (121) comporte une pluralité de projections (121c) sous les brides d'accrochage (121b), qui font saillie à partir du côté du réservoir d'eau (121) de sensiblement la même distance que les brides d'accrochage (121b), pour empêcher le réservoir d'eau (121) de basculer lorsque les brides d'accrochage (121b) sont accrochées au support de bride d'accrochage (111a).

6. Machine à pain selon la revendication 4, dans laquelle la gaine (111) comporte une projection sous le support de bride d'accrochage (111a), qui fait saillie à partir du côté du réservoir d'eau (121) de sensiblement la même distance que la bride d'accrochage (121b).

7. Machine à pain selon l'une quelconque des revendications précédentes, comprenant en outre un dispositif de chauffage auxiliaire (131) à l'intérieur de la gaine (111) pour chauffer une partie latérale du réservoir d'eau (121) et ajuster une quantité de la vapeur générée à partir du réservoir d'eau (121).

8. Machine à pain selon la revendication 7, comprenant en outre une oreille calorifugée (133) connectée à une paroi extérieure de la gaine (111) de manière adjacente au dispositif de chauffage auxiliaire (131), et utilisée pour l'isolation calorifuge.

9. Machine à pain selon l'une quelconque des revendications précédentes, dans laquelle le réservoir d'eau est constitué d'un métal ayant une grande conductivité thermique.

10. Machine à pain selon la revendication 4, dans laquelle les brides d'accrochage (121b) sont fixées à la gaine (111) et les supports de bride d'accrochage (111a) sont fixés au réservoir d'eau (121).

11. Machine à pain selon l'une quelconque des revendications précédentes, comprenant en outre un support de soutien à l'intérieur de la gaine (111) pour soutenir une partie inférieure du réservoir d'eau (121).

12. Machine à pain selon l'une quelconque des revendications précédentes, dans laquelle le réservoir d'eau est situé de manière adjacente à une porte fixée à la gaine.

13. Machine à pain selon la revendication 8, dans laquelle le dispositif de chauffage auxiliaire (131) est passé à travers une ouverture dans la gaine (111) et placé près du réservoir d'eau (121), et l'oreille calorifugée (133) entoure la partie du dispositif de chauffage auxiliaire (131) s'étendant à l'extérieur de la gaine (111).

14. Machine à pain selon la revendication 8 ou 13, dans laquelle l'oreille calorifugée (133) comprend une oreille de soutien (131a) pour soutenir le dispositif de chauffage auxiliaire (131).

15. Procédé d'utilisation d'une machine à pain **caractérisé en ce que** la machine à pain est selon l'une quelconque des revendications précédentes, le procédé comprenant les étapes consistant à :
remplir au moins partiellement le réservoir d'eau (121) d'eau ; et
chauffer le bac de cuisson (115) et le réservoir d'eau (121).
